# EUROPEAN PATENT APPLICATION

(11) **EP 1 385 168 A2**
(43) Date of publication of application: **28.01.2004**
(21) Application number: 03254368.8
(22) Date of filing: 10.07.2003
(51) Int. Cl.: G11B 23/107, G11B 23/26

(54) **Single reel tape cartridge with tape cartridge leader**

(30) Priority: 23.07.2002 US 202661
(71) Applicant: QUANTUM CORPORATION, Milpitas, CA 95035 (US)
(72) Inventor: Kuhar, James J., Broomfield Colorado 80020 (US); Stamm, Stephen, Fort Lupton Colorado 80621 (US)
(74) Representative: Charig, Raymond Julian

(57) **Abstract**

A tape cartridge having a low stress tape cartridge leader and cartridge leader shock absorption system for improved reliability. The tape cartridge includes a cartridge housing and a supply reel rotatably connected within the cartridge housing. The supply reel includes a magnetic tape media spooled thereon that is terminated at one end by a tape cartridge leader. The tape cartridge leader includes a connector to attach the leader to a tape-handling device. The tape cartridge also includes a cartridge leader stop formed in the cartridge housing. The cartridge leader stop includes a shock absorbing material to absorb impact forces between the cartridge leader stop and the tape cartridge leader. In another embodiment of the invention, the cartridge leader is configured to uniformly contact the respective portions of the cartridge housing, e.g. the leader stop, to reduce stress concentration points and the overall working load on the leader.

## Description

### FIELD OF THE INVENTION

The invention is related to the field of tape cartridges, and in particular, to a tape cartridge having a low stress tape cartridge leader and cartridge leader shock absorption system to reduce working loads on the cartridge leader and improve cartridge reliability.

### BACKGROUND OF THE INVENTION

Digital data is stored on tape cartridges that include a magnetic tape media wound between a pair of tape reels. In the art of data storage, the physical space required to store data on tape cartridges is an important concern. To conserve space, tape-handling devices, e.g. a tape drive or tape library, often use a single reel tape cartridge design. Single reel tape cartridge designs utilize a supply reel located within a removable tape cartridge and a take-up reel located within the tape-handling device.

In such a device, the tape media must be loaded into the tape-handling device after insertion of the cartridge. The loading operation includes connecting the tape media to the take-up reel in the tape-handling device and winding the media to a start point or read position adjacent to a tape head: Various methods have been employed to make this connection. One such method connects the tape media to the take-up reel via a buckle connection between the tape cartridge leader and the take-up leader. The tape cartridge leader is a strong flexible plastic strip that terminates the tape media at one end. Similarly, the take-up leader is a strong flexible plastic strip that attaches at one end to the take-up reel. In one example of the buckling mechanism, an ovular aperture is included in the distal end of the cartridge leader that mates with a stem and tab on the take-up leader designed to buckle with the ovular aperture. In another example of the buckling mechanism, the cartridge leader includes a bar supporting a pair of receivers designed to buckle with a corresponding bar on the take-up leader.

When a tape cartridge is ejected from the tape-handling device, the buckle connection between the tape cartridge leader and the take-up leader is disconnected. The tape cartridge leader is then wound back into the cartridge to a home position where subsequent buckle connections may be made. In this regard, the tape cartridge leader also includes a mechanism that prevents the leader from being spooled into the tape cartridge past the home position. For instance, in a leader including the first type of buckling mechanism described above, a pair of opposing rectangular ears extend outward from the leader to contact a leader stop formed in the cartridge housing. The ears and leader stop position the leader in the home position for subsequent buckle operations. In a leader, including the second type of buckling mechanism described above, the bar and/or receivers contact the leader stop to position the leader in the home position. In either case, the leader stop is typically a pair of opposing plastic features formed in a top and bottom portion of the tape cartridge housing respectively. The opposing plastic features permit the leader and tape media to be wound into the tape cartridge until the leader stop is contacted by the opposing ears or bar and/or receivers.

Unfortunately, after a certain number of load and unload cycles, tape cartridge leaders often develop stress cracks due to working loads imposed during operation. For instance, such cracks often develop at the junction of the opposing ears and the main body of the leader due to the continuous impact with the hard plastic of the leader stop. Similarly, in a leader with the latter buckling mechanism, such stress cracks form at the interface between the bar and leader because of continuous impact forces. In another instance, such cracks often develop in the aperture designed to receive the stem and tab that form the buckle connection with the take-up leader. In still yet another instance, such cracks develop in a leader hook slot. The leader hook slot may be included in either of the above leader designs and is an aperture in the leader that mates with a hook formed in the tape cartridge to further prevent the leader from being sucked into the tape cartridge during the unbuckling operation. Such cracks render the tape cartridge inoperable, requiring replacement of the entire cartridge and often a difficult procedure to retrieve any data currently on the tape media within the cartridge. Additionally, as these cracks develop in the cartridge leader, they generate debris that can damage the tape media, the tape head, and other mechanical apparatus in the cartridge and the tape-handling device.

Another problem that often causes damage to tape cartridge leaders is "leader runaway." Under certain circumstances, the take-up leader can become unbuckled from the cartridge leader before the cartridge leader is pulled into the cartridge housing to the home position against the leader stop, a situation known in the art as "leader runaway." During "leader runaway" the cartridge leader is retracted into the cartridge at an accelerated rate of speed, which results in an abnormal impact of the opposing ears, leader hook slot, and/or bar, against the cartridge stop, thereby damaging the leader.

### SUMMARY OF THE INVENTION

In view of the foregoing, a broad object of the present invention is to increase the life of single tape cartridges by improving the cartridge leader design to reduce working loads thereon. Another object of the present invention is to reduce the likelihood of damage to tape cartridges, and specifically the tape cartridge leader, during abnormal operations such as a "leader runaway." Another objective of the present invention is to increase the maximum loads that may be imposed on a cartridge leader before failure.

In relation to a tape cartridge according to the present invention, each of the various aspects discussed in more detail below generally include a cartridge housing and a supply reel rotatably connected within the cartridge housing. The supply reel includes a magnetic tape media spooled thereon that is terminated at one end by a tape cartridge leader. The tape cartridge leader includes a connector to attach, e.g. via a buckle connection, the tape cartridge leader to a take-up leader in a tape handling device, e.g. tape drive. The tape cartridge also includes a cartridge leader stop formed in the cartridge housing. The cartridge leader stop is sized and positioned to prevent the connector of the tape cartridge leader from retracting into the cartridge housing to a point where subsequent connections with a take-up leader are not possible. In other words, the cartridge leader stop positions the connector in a home position for subsequent connections to a take-up leader.

In accordance with one aspect of the present invention, the cartridge leader stop of the tape cartridge includes a shock absorbing material to absorb and reduce impact forces between the cartridge leader stop and the tape cartridge leader. The shock absorbing material of the cartridge leader stop provides a cushion for the contacting portion of the cartridge leader to increase the number of load and unload cycles before a leader failure, e.g. stress cracks on the opposing ears and/or at the interface of the leader and bar The shock absorbing material also protects the cartridge leader during abnormal operations such as a "leader runaway" by reducing the impact force between the cartridge leader and the leader stop.

According to one embodiment of the invention, the cartridge leader stop includes a first portion disposed in a first half of the tape cartridge housing that includes a first shock absorbing material. A second portion is disposed in a second half of the cartridge housing that includes a second shock absorbing material. The shock absorbing material may be any compliant material suitable for use in a tape cartridge environment, e.g. material that does not interfere with reading/writing to the magnetic media, can withstand moderately warm temperatures, and is not subject to decomposition resulting in debris in the tape cartridge and/or tape handling device.

In one characterization of a cartridge leader, a pair of opposing ears extending outward from opposing sides of the leader respectively are designed to contact the shock absorbing material of the leader stop. In this regard, when the cartridge leader is unbuckled from a take-up leader, the cartridge leader is spooled into the cartridge housing where the opposing ears contact the first and second portions, respectively, of the cartridge leader stop and shock absorbing material disposed thereon. Advantageously, in a leader in accordance with this characterization, the present leader stop prolongs the life of the leader by preventing damage to the opposing ears during normal operation and during a "leader runaway."

In another characterization of a cartridge leader, a connector having a bar connected perpendicular to one end of the leader is designed to contact the shock absorbing material of the leader stop. In this regard, a first receiver is connected to one end of the bar horizontally relative to the cartridge leader. A second receiver is connected to the other end of the bar also horizontally relative to the cartridge leader. The pair of receivers are configured to receive a connector bar on a take-up leader during a buckling operation. When the cartridge leader is unbuckled from the take-up leader, the cartridge leader is spooled into the cartridge housing where the respective ends of the bar contact the first and second portions, respectively, of the cartridge leader stop and shock absorbing material disposed thereon. In this regard, each of the shock absorbing materials disposed in the first and second portions of the leader stop may include a recess to receive the bar ends to facilitate positioning of the connector in the home position within the cartridge housing. Advantageously, in a leader in accordance with this characterization, the present leader stop prolongs the life of the leader by preventing damage to the bar and receivers e.g. bending of the bar and or tearing of the bar away from the leader during normal operation and during a "leader runaway."

According to another aspect of the present invention, the tape cartridge leader includes numerous modifications to reduce stress-concentration points in the cartridge leader. For instance, in a first embodiment, the leader includes an ovular aperture for receiving a mating geometry, e.g. mushroom and stem, of a take-up leader. The aperture in turn, includes a notch that includes interior comers with a rounded radius designed to substantially mate with the shape of the tab of the take-up leader. In this regard, the rounded interior comers distribute the forces within the aperture/notch during buckling to reduce stress concentration points.

In another embodiment where the cartridge leader includes the opposing ears described above, the interior corners of the ears also include a rounded radius so that they substantially mate with the cartridge leader stop. This in turn evenly distributes impact forces over a wider area of the ears to reduce stress concentration points when the leader is spooled into the tape cartridge housing against the leader stop. It will also be appreciated that such mating of the geometry of the ears with the leader stop enhances leader reliability both when the cartridge is equipped with a prior art hard plastic leader stop or with the above-described shock absorbing leader stop.

In yet another embodiment, the cartridge leader includes a leader hook slot that also includes a rounded radius in one end so that it substantially mates with a hook member of the leader stop. This in turn, reduces stress concentration points when the leader is spooled into the tape cartridge housing against the cartridge stop, and particularly, when the hook member is engaged to prevent the leader from being sucked into the tape cartridge housing.

According to another aspect of the present invention, the tape cartridge includes both the cartridge stop including the shock absorbing material and the cartridge leader having the mating geometries to reduce stress concentration points on the leader. Numerous additional features and advantages of the present invention wilt become apparent to those skilled in the art upon consideration of the further description that follows.

### BRIEF DESCRIPTION OF THE DRAWINGS

FIG. 1 illustrates an example of a tape-handling device and tape cartridge employing the principles of the present invention;
FIG. 2 illustrates an example of a prior art buckle connection between a tape cartridge leader and a take-up leader;
FIG. 3a illustrates an example of a cartridge stop including a shock absorbing material;
FIG. 3b illustrates the tape cartridge leader of FIG. 2 in the home position against the cartridge stop of FIG. 3;
FIG. 4 illustrates an assembly view of the cartridge stop of FIG. 3a;
FIG. 5 illustrates an example of a tape cartridge leader according to the present invention;
FIG. 6 illustrates another example of a prior art buckle connection between a tape cartridge leader and a take-up leader;
FIG. 7 illustrates another example of a cartridge stop including a shock absorbing material;
FIG. 8 illustrates an assembly view of the cartridge stop of FIG. 7; and
FIG. 9 illustrates the tape cartridge leader in the home position against the cartridge stop of FIG. 7.

### DETAILED DESCRIPTION

Reference will now be made to the accompanying drawings, which at least assist in illustrating the various pertinent features of the present invention. In this regard, the following description of a tape-handling device is presented for purposes of illustration and description. Furthermore, the description is not intended to limit the invention to the form disclosed herein. Consequently, variations and modifications commensurate with the following teachings, and skill and knowledge of the relevant art, are within the scope of the present invention. The embodiments described herein are further intended to explain the best modes known of practicing the invention and to enable others skilled in the art to utilize the invention in such, or other embodiments and with various modifications required by the particular application(s) or use(s) of the present invention.

### Tape Handling System:

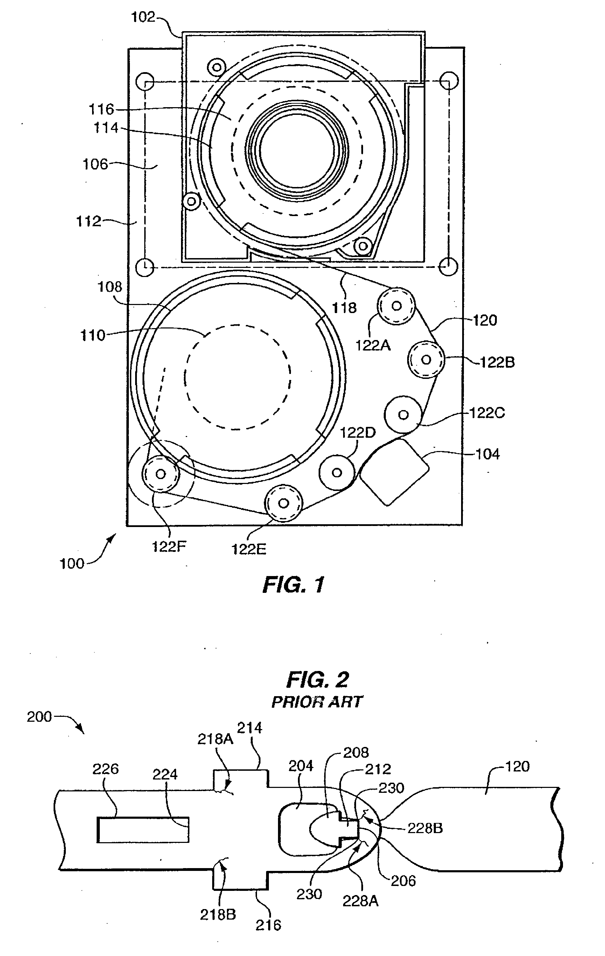

Figure 1 depicts an example of a tape-handling device, namely tape drive 100, for use with a tape cartridge 102, according to the present invention. The tape drive 100 includes a tape head 104, a tape cartridge receiver 106, and an internal take-up reel 108 driven by a take-up reel drive motor 110. These elements are contained within a housing, typically including a base 112 and top cover portion (not shown). The tape cartridge 102 includes a supply reel 114 including magnetic tape media 116 spooled thereon. The tape media 116 is of a predetermined particular type and is provided to the tape drive 100 by insertion of the tape cartridge 102 into the cartridge receiver 106. After insertion of the tape cartridge 102, an automatic loading process is performed in the tape drive 100. The loading process is representative of connecting, e.g. through a buckle connection, a tape cartridge leader 118, connected to the tape media 116, and a take-up leader 120, connected to the take-up reel 108. After connection of the tape cartridge leader 118 and take-up leader 120, the tape media 116 is spooled off of the cartridge supply reel 114 onto the take-up reel 108 via the tape path defined by guide rollers 122A-F.

The following description is presented using the tape cartridge 102 as an exemplary tape cartridge. It will be appreciated however, that a tape cartridge according to the present invention may be configured with the cartridge stop including the shock absorbing material and a conventional tape cartridge leader, may be configured with both the cartridge leader stop including the shock absorbing material and a tape cartridge leader according to the principles of the present invention, or may be configured with a conventional cartridge leader stop and a tape cartridge leader according to the principles of the present invention.

Referring to figure 2 there is shown an example of a prior art tape cartridge leader for the tape cartridge 102, namely tape cartridge leader 200, coupled with the take-up leader 120. The tape cartridge leader 200 includes an ovular aperture 204 and a notch 206 for connecting to the take-up leader 120. In this regard, the take-up leader 120 includes a mushroom shaped tab 208 and a stem 212. The aperture 204 of the cartridge leader 200 is dimensioned to enable the tab 208 and stem 212 of the take-up leader 120 to pass therethrough. The notch 206 is dimensioned to receive the stem 212 of the take-up leader 120, but prevent the tab 208 from passing therethrough.

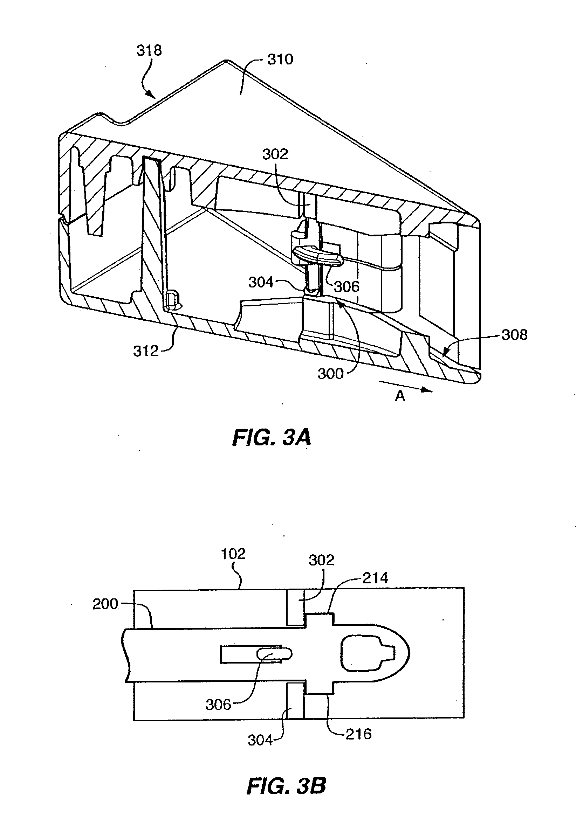

Referring also to figures 3a and 3b, the tape cartridge leader 200 includes a pair of opposing ears 214 and 216 respectively, that mate with a leader stop 300 when the cartridge leader 200 is wound back into the tape cartridge 102 after an unload operation. In this regard, the cartridge 102 includes a tape path 308 defined in the respective halves 310 and 312 of the cartridge housing 318. The tape path 308 guides the leader 200 within the cartridge 102 to position the ears 214 and 216 against the leader stop 300, in a home position illustrated in figure 3b. The leader stop 300 is positioned near the cartridge door (not shown) in the housing 318 of the tape cartridge 102. The leader stop 300 is sized and positioned to prevent the opposing ears, 214 and 216, of the leader 200 from being spooled into the cartridge housing 318 past the home position.

By way of background, after a certain number of unload operations, the leader 200 can develop stress cracks, as exemplified by cracks 218A and 218B at the junction of the opposing ears, 214 and 216 and the body of the leader 200. Cracks 218A and 218B are a result of the continuous contact and tension imposed on the opposing ears, 214 and 216, against a leader stop during the unload operation. Additionally, under certain circumstances, the take-up leader 202 can become unbuckled from the cartridge leader 200 before the cartridge leader 200 has been pulled into the cartridge housing against the cartridge leader stop. This is commonly referred to as "leader runaway." During leader runaway, the cartridge leader 200 is retracted into the cartridge housing at an accelerated rate of speed, which results in an abnormal impact of the opposing ears; 214 and 216, and cartridge stop thereby causing cracks, 218A and 218B.

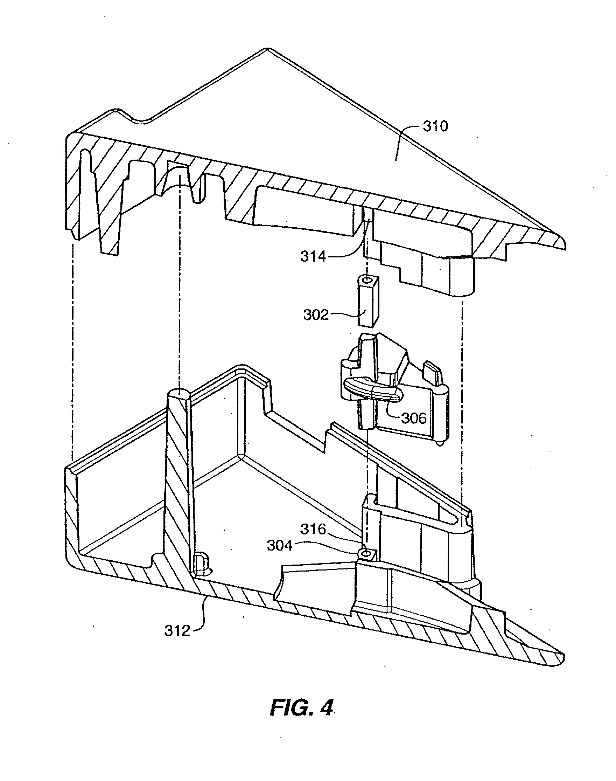

Referring also to figure 4, to prevent damage to the cartridge leader 200 during a "leader runaway" and to prolong the life of the leader 200 during normal operation, the leader stop 300 includes a shock absorbing material, namely bumpers 302 and 304. The bumpers, 302 and 304, are disposed in the portion of the cartridge stop 300 that contacts the ears 214 and 216. In this regard, the cartridge stop 300 includes a hook member 306 designed to mate with a leader hook slot 226 when the leader 200 is spooled back into the tape cartridge 102 and unbuckled from the take-up leader 120. When the cartridge leader 200 is unbuckled from the take-up leader 120, the opposing ears, 214 and 216, are tensioned against the bumpers, 302 and 304, of the cartridge stop 300, with the leader hook slot 226 slipped over the top of the hook member 306. In this regard, the hook member 306 serves as a secondary safety to prevent the cartridge leader 200 from being sucked into the cartridge housing 318 in the event of a failure of the ears 214 and 216. Operationally, when the cartridge leader 200 is again buckled with the take-up leader 120, the take-up leader 120 spools the cartridge leader 200 and tape media 116 off of the hook member 306 in the direction (A) and onto the take-up reel 108. In this regard, the cartridge leader 200 and tape media 116 are pulled over the top of the hook member 306 out of the cartridge 102 and through the tape path defined by the guide rollers 122A-F. When the cartridge leader 200 is again spooled back onto the supply reel 114 of the cartridge 102, the leader hook slot 226 slips over the top of the hook member 306 thereby seating the leader 200 against the cartridge stop 300, and specifically the ears 214 and 216 against the bumpers 302 and 304 as illustrated in figure 3b. Advantageously, testing of the tape cartridge 102 including the bumpers, 302 and 304, increases the life of the cartridge leader by approximately twice as many load and unload cycles before stress cracks, such as cracks 218A and 218B form in the leader 200.

As illustrated in figure 4, in one example of the present invention, the shock absorbing material, namely bumpers, 302 and 304, seat on pins, 314 and 316, integrally formed in respective first and second halves, 310 and 312, of the cartridge housing 318. Alternatively, it will be appreciated that other methods of attaching the bumpers, 302 and 304, such as with an adhesive or heat staking operation, may be utilized to attach the bumpers, 302 and 304, to the respective halves, 310 and 31, of the cartridge housing 318. In this regard, those skilled in the art will appreciate that the bumpers, 302 and 304, may be various types of pliable and/or compliant material. Some examples of such materials include without limitation, various polymeric materials, rubbers, foam materials, and elastomer, with one preferred example being santoprene. Advantageously, such material is suitable for use in tape cartridge environments in that it does not interfere with reading/writing to the magnetic media, can withstand moderately warm temperatures, and is not subject to decomposition resulting in debris in the cartridge 102.

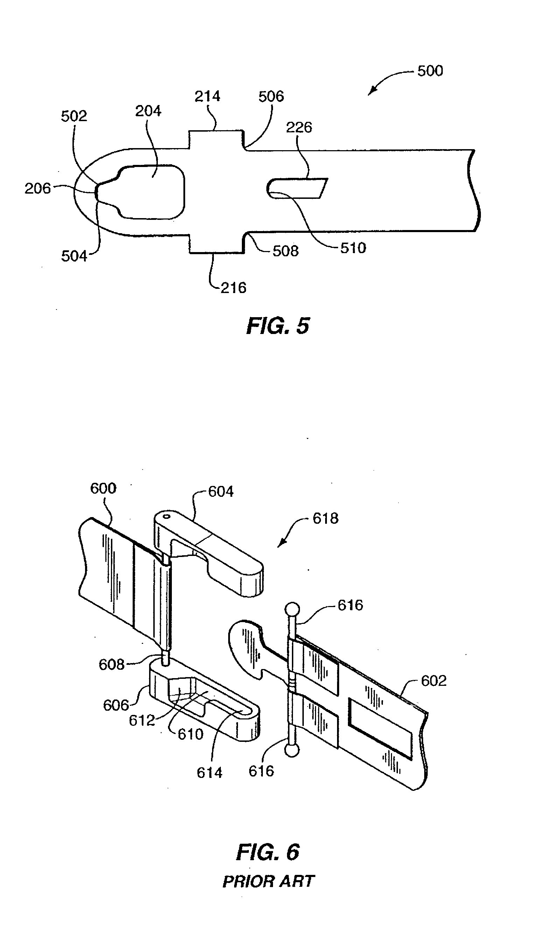

Referring to figure 5, there is shown another example of a tape cartridge leader for the tape cartridge 102, namely tape cartridge leader 500. The tape cartridge leader 500 is substantially similar to the tape cartridge leader 200 in that it includes the ovular aperture 204, the notch 206, the leader hook slot 226, and the opposing ears 214 and 216. To improve cartridge reliability, however, the cartridge leader 500 also includes numerous modifications to reduce stress concentration points in the cartridge leader 500. In this regard, it should be noted that the cartridge leader 500 may be utilized in a tape cartridge, such as cartridge 102, by itself to improve cartridge life or may be utilized in combination with the above-described cartridge stop 300 to improve cartridge life.

Referring again to figure 2, a cartridge leader such as leader 200, is also subject to failures resulting from stress concentration points in the area of the aperture 204 and notch 206. Specifically, after a certain number of buckling and unbuckling operations, the leader 200 can develop stress cracks, as exemplified by cracks, 228A and 228B, in the distal end of the notch 206. Cracks 228A-B are a result of the continuous contact and tension imposed on the notch 206 by the stem 212 and tab 208 during buckling and unbuckling operations.

To prevent such stress cracks, e.g. 228A-B, the cartridge leader 500 is constructed such that the interior comers, 502 and 504, of the notch 206, include rounded radii. Specifically, the rounded radii are designed to substantially mate with the shape of the tab 210 of the take-up leader 120 such that stress concentration points imposed on the leader 500 during buckling and unbuckling with the take-up leader 120 are significantly reduced. More specifically, the comers, 502 and 504, each include a radius in the range of 0.01 inches to 0.1 inches and more preferably include a radius of 0.02 inches. Advantageously, the rounded radius of the comers, 502 and 504, as opposed to the ninety-degree comers, 230 and 232, reduces working stress on both the cartridge leader 500 and the take-up leader 120 during buckling and unbuckling operations. This in turn results in a longer leader life, e.g. increased load and unload cycles, before leader failure.

According to a second aspect of the cartridge leader 500, the interior corners, 506 and 508, of the opposing ears, 214 and 216, also includes a rounded radius so that they substantially mate with a cartridge stop, e.g. stop 300, to reduce stress concentration points imposed on the leader 500, when it is spooled into the cartridge 102 against the cartridge stop, e.g. stop 300. More specifically, the comers, 506 and 508, include a radius in the range of 0.01 inches to 0.1 inches and more preferably include a radius of 0.051 inches. Advantageously, testing of the leader 500 indicates that the rounded radius of the comers, 506 and 508, as opposed to the ninety-degree comers of leader 200, reduces the force acting on any one area of the comers, 506 and 508, from an average of 26.8 pounds to an average of 20.8 pounds. Again, this significantly reduces stress concentration points as well as the overall working forces acting on the leader 500.

According to a third aspect of the cartridge leader 500, the end 510 of the leader hook slot 226 also includes a rounded radius so that it substantially mates with the hook member 306. This in turn, reduces stress concentration points imposed on the leader 500 when it is spooled into the cartridge 102 against the hook member 306. More specifically, the end 510 includes a radius in the range of 0.01 inches to 0.1 inches and more preferably includes a radius of 0.47 inches. Advantageously, testing of the leader 500 indicates that such a radius, as opposed to smaller or larger radii, increases the average force before failure of the leader hook slot 226, from 12.8 pounds to 24.7 pounds. This in turn significantly reduces the potential for damage to the leader hook slot 226 when engaged by the hook member 306, and specifically, during abnormal impacts such as caused a leader runaway. It will be appreciated, that preferably the cartridge leader 500 is utilized in combination with the cartridge stop 300 to provide improved cartridge reliability by providing the added advantage of the shock absorbing material for the ears, 214 and 216, in combination with the improved design of the leader 500.

Figure 6 illustrates another example of a prior art tape cartridge leader 600 and a take-up leader 602. In this characterization, the cartridge leader 600 includes a connector referred to generally by numeral 618. The connector includes a pair of opposing receivers 604 and 606 secured together with a connector bar 608, which is attached to the cartridge leader 600. A substantially rectangular receiver housing defines each receiver 604 and 606. Each receiver housing includes a channel 610 having a channel opening 612 and a channel end 614. During coupling, a buckle bar 616 on the take-up leader 602 is inserted into the channel opening 612. Subsequently the buckle bar 616 is forced to slide in the channel 610 until the buckle bar 616 reaches the channel end 614. In this regard, each channel 610 includes a bump which projects into the channel 610 near the channel end 614 to retain the buckle bar 616 in the channel 610.

As with the leader 200, the ends of the bar 608 and receiver housings mate with a leader stop when the cartridge leader 600 is wound back into the tape cartridge 102 after an unload operation. Further in this regard, under certain circumstances, the take-up leader 602 can become unbuckled from the cartridge leader 600 before the cartridge leader 600 has been pulled into the cartridge housing against the cartridge leader stop, resulting in a "leader runaway." In the case of the cartridge leader 600, "leader runaway" often results in damage to the connector bar 608. Specifically, the connector bar 608 is often bent inward positioning the receiver housings out of position for the buckle connection with the connector bar 616.

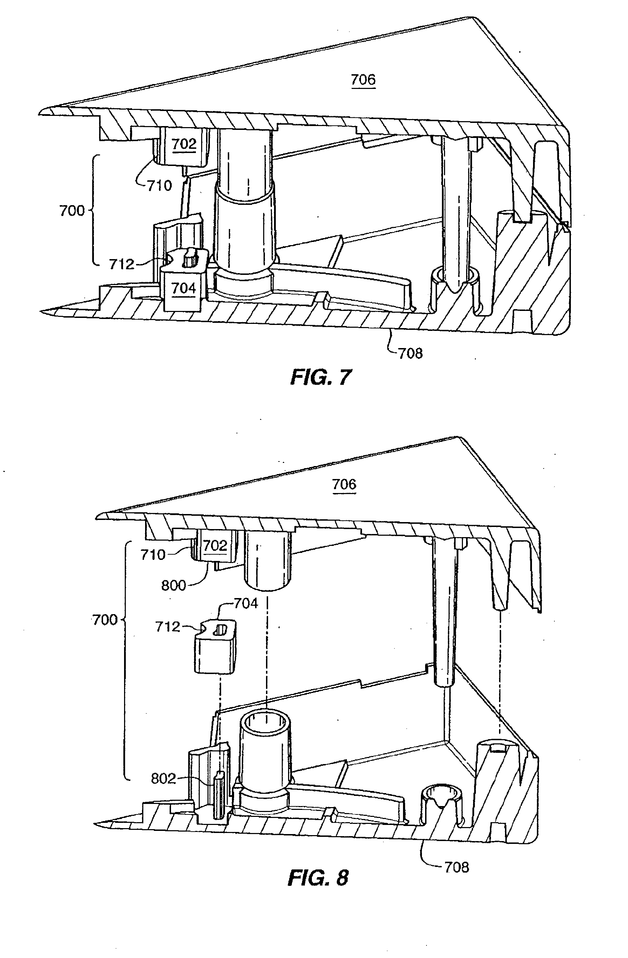

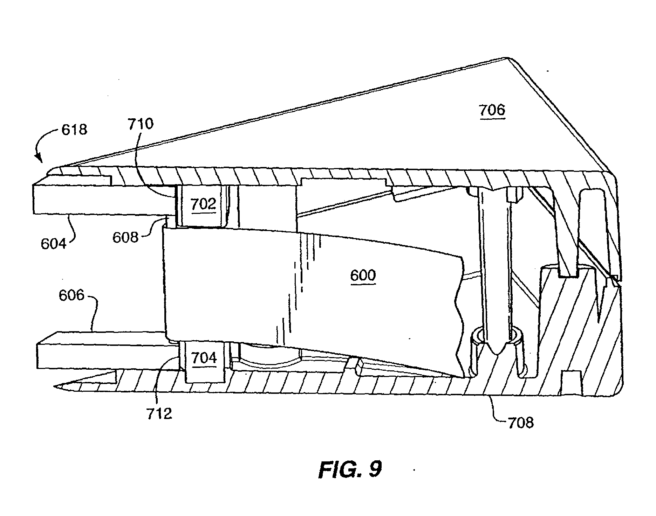

Referring to figures 7-9, to prevent damage to the cartridge leader 600 during a "leader runaway" and to prolong the life of the leader 600 during normal operation, a cartridge stop 700 is provided in the tape cartridge 102 that includes the shock absorbing material, namely, bumpers 702 and 704. Similar to the bumpers, 302 and 304, the bumpers 702 and 704 are disposed in the portion of the cartridge stop 700 that contacts the back of the receivers 604 and 606. The bumpers, 702 and 704, further include recesses, 710 and 712, configured to mate with the corresponding portions of the connector 618 and seat the connector 618 in its home position within the tape cartridge 102 as illustrated in figure 9.

In one example of the present invention, the bumpers, 702 and 704, seat on pins, 800 and 802, integrally formed in respective first and second halves, 706 and 708, of the housing of the tape cartridge 102. Alternatively, it will be appreciated that other methods of attaching the bumpers, 702 and 704, such as with an adhesive or heat staking operation may be utilized. In this regard, those skilled in the art will appreciate that the bumpers, 702 and 704, may be various types of compliant and/or pliable material. As with the above embodiment, some examples of such materials include without limitation, various polymeric materials, rubbers, foam materials, and elastomer, with one preferred example being santoprene. Those skilled in the art will appreciate variations of the above-described embodiments that fall within the scope of the invention. As a result, the invention is not limited to the specific examples and illustrations discussed above, but only by the following claims and their equivalents.

## Claims

1. A single reel tape cartridge, comprising:
a cartridge housing;
a supply reel rotatably connected within the cartridge housing and including a spool of magnetic tape media wound thereon;
a tape cartridge leader disposed on one end of the magnetic tape media including a connector at a distal end to detachably connect the cartridge leader to a tape handling device; and
a cartridge leader stop including a shock absorbing material to absorb impact forces between the cartridge leader stop and the tape cartridge leader.

2. The cartridge of Claim 1 wherein cartridge leader stop comprises:
a first portion disposed in a first half of the cartridge housing and including a first shock absorbing material; and
a second portion disposed in a second half of the cartridge housing and including a second shock absorbing material.

3. The cartridge of Claim 2 wherein the tape cartridge leader comprises:
a first ear extending outward from a first side of the tape cartridge leader to contact the first portion of the cartridge leader stop; and
a second ear extending outward from a second side of the tape cartridge leader to contact the second portion of the cartridge leader stop.

4. The cartridge of Claim 2 wherein the connector comprises:
a bar perpendicularly connected to the tape cartridge leader;
a first receiver disposed on a first end of the bar horizontally relative to the tape cartridge leader; and
a second receiver disposed on a second end of the bar horizontally relative to the tape cartridge leader, wherein the first end of the bar contacts the first portion of the cartridge leader stop and the second end of the bar contacts the second portion of the leader stop.

5. The cartridge of Claim 3 wherein the connector comprises:
an aperture formed in a distal end of the tape cartridge leader for receiving a mating geometry disposed on a distal end of a take-up leader in the tape handling device.

6. The cartridge of Claim 4 wherein the first shock absorbing material includes a first recess to receive the first end of the bar and the second shock absorbing material includes a second recess to receive the second end of the bar, wherein the first and second recesses facilitate positioning of the connector in a home position in the tape cartridge.

7. A single reel tape cartridge, comprising:
a cartridge housing;
a supply reel rotatably connected within the cartridge housing and including a spool of magnetic tape media wound thereon;
a tape cartridge leader disposed on one end of the magnetic tape media; and
a cartridge leader stop to position a connector disposed on a distal end of the cartridge leader for connection to the tape handling device,
wherein the tape cartridge leader includes a first ear extending outward from a first side of the tape cartridge leader and a second ear extending outward from a second side of the tape cartridge leader,
wherein the first ear includes an arcuate radius between the junction of the first ear and the first side of the tape cartridge leader to uniformly contact the cartridge leader stop,
wherein the second ear includes an arcuate radius between the junction of the second ear and the second side of the tape cartridge leader to uniformly contact the cartridge leader stop.

8. The tape cartridge of Claim 7 comprising:
a leader hook slot for receiving a leader hook, wherein an end of the leader hook slot includes a radius corresponding to the shape of the leader hook to uniformly mate with the leader hook.

9. The cartridge of Claim 7 wherein cartridge leader stop comprises:
a first portion disposed in a first half of the cartridge housing and including a first shock absorbing material; and
a second portion disposed in a second half of the cartridge housing and including a second shock absorbing material.

10. A single reel tape cartridge, comprising:
a cartridge housing;
a supply reel rotatably connected within the cartridge housing and including a spool of magnetic tape media wound thereon;
a tape cartridge leader disposed on one end of the magnetic tape media; and
a cartridge leader stop including a shock absorbing material to absorb impact forces between the cartridge leader stop and the tape cartridge leader,
wherein the tape cartridge leader includes a first ear extending outward from a first side of the tape cartridge leader and a second ear extending outward from a second side of the tape cartridge leader,
wherein the first ear includes an arcuate radius between the junction of the first ear arid the first side of the tape cartridge leader to uniformly contact a first portion of the leader stop,
wherein the second ear includes an arcuate radius between the junction of the second ear and the second side of the tape cartridge leader to uniformly contact a second portion of the leader stop.

11. The tape cartridge of Claim 10 comprising:
a leader hook slot for receiving a leader hook, wherein an end of the leader hook slot includes a radius corresponding to the shape of the leader hook to uniformly mate with the leader hook.

12. The cartridge of Claim 10 wherein the first portion of the cartridge leader stop is disposed in a first half of the cartridge housing and includes a first shock absorbing material and the second portion of the cartridge leader stop is disposed in a second half of the cartridge housing and includes a second shock absorbing material.

13. A single reel tape cartridge leader, comprising:
an elongated flexible plastic strip;
an aperture formed in a distal end of the strip;
a first ear extending outward from a first side of the strip; and
a second ear extending outward from a second side of the strip, wherein the first ear includes an arcuate radius between a junction of the first ear and a first side of the strip to uniformly contact a first portion of a cartridge leader stop and wherein the second ear includes the arcuate radius between a junction of the second ear and a second side of the strip to uniformly contact a second portion of the cartridge leader stop.

14. The leader of Claim 13 comprising:
a leader hook slot for receiving a leader hook, wherein an end of the leader hook slot includes a first radius corresponding to the shape of the leader hook to uniformly mate with the leader hook.

15. The leader of Claim 13 comprising:
a notch formed in a distal end of the aperture, wherein the notch includes a second radius corresponding to the shape of a mating geometry on a take-up leader to uniformly mate with the mating geometry.
